Europäisches Patentamt

(19) European Patent Office

Office européen des brevets

(11) Numéro de publication : **0 011 561**
**B1**

(12) **FASCICULE DE BREVET EUROPÉEN**

(45) Date de publication du fascicule du brevet :
**25.07.84**

(21) Numéro de dépôt : **79400850.8**

(22) Date de dépôt : **13.11.79**

(51) Int. Cl.³ : **G 02 B 5/14**

(54) Procédé de mise en place d'une fibre optique dans un embout de connecteur.

(30) Priorité : **13.11.78 FR 7831953**

(43) Date de publication de la demande :
**28.05.80 Bulletin 80/11**

(45) Mention de la délivrance du brevet :
**25.07.84 Bulletin 84/30**

(84) Etats contractants désignés :
**BE CH DE GB IT NL SE**

(56) Documents cités :
**DE-A- 2 708 014**
**FR-A- 2 299 655**
**GB-A- 1 458 896**
**GB-A- 1 480 445**
**US-A- 3 861 781**
**Bell System Technical Journal- Vol. 52, No. 9, November 1973, pages 1579-1587**

(73) Titulaire : **RADIALL Société anonyme dite:**
**101, rue Philibert Hoffmann**
**F-93116 Rosny sous Bois (FR)**

(72) Inventeur : **Despouys, Jean-Bernard**
**4, rue Frédéric Mistral**
**F-75015 Paris (FR)**

(74) Mandataire : **Nony, Michel** ·
**Cabinet Nony 29, rue Cambacérès**
**F-75008 Paris (FR)**

Jouve, 18, rue St-Denis, 75001 Paris, France

## Description

La présente invention est relative à un procédé de mise en place d'une fibre optique dans un embout de connecteur.

L'invention est destinée plus particulièrement, bien que non exclusivement, à la connexion de mono-fibres optiques à saut d'indice. De telles fibres comportent un cœur, un revêtement ou « cladding », et une gaine externe de protection mécanique. Pour assurer un guidage du flux lumineux dans le cœur de la fibre l'indice de réfraction du cœur est supérieur et voisin de l'indice de réfraction du revêtement. On a ainsi en particulier réalisé des fibres dont le cœur est constitué de silice pure, le revêtement ou « cladding » étant en silicone. La gaine externe de protection mécanique est en matière plastique, telle que par exemple celle commercialisée sous la dénomination de « TEFZEL ».

La difficulté majeure rencontrée jusqu'à présent dans la connexion bout à bout de telles fibres réside dans le fait que le silicone constituant le revêtement est mou et fragile ce qui rend délicate la manipulation de la fibre après dénudage de la gaine externe de protection mécanique.

Les procédés connus de connexion de telles fibres optiques consistent à retirer à l'extrémité de chaque fibre à connecter d'une part la gaine externe de protection mécanique et généralement d'autre part le revêtement de silicone. La fibre ainsi dénudée, généralement avec le cœur à l'air libre, est insérée dans un embout de connecteur puis immobilisée soit par un collage direct sur le cœur soit par bridage mécanique de la gaine externe, le cœur restant alors non immobilisé. Un tel procédé est par exemple décrit dans le brevet britannique 1 480 445 dans lequel la fibre est collée dans un embout après enlèvement de la gaine plastique de protection. Plus précisément ce brevet britannique décrit un procédé de mise en place d'une fibre optique dans un embout de connecteur, ladite fibre présentant un cœur, un revêtement ou cladding et une gaine externe de protection mécanique, dans lequel on dénude la fibre sur une certaine longueur à partir de son extrémité, en retirant la gaine externe de protection mécanique sans retirer le revêtement ou cladding, on enfile la fibre par l'extrémité arrière d'un embout de connecteur tubulaire présentant un passage central rétréci dans sa zone d'extrémité avant, de manière que ladite partie d'extrémité dénudée de la fibre soit en partie contenue dans l'embout de connecteur et fasse en partie saillie de l'extrémité avant de l'embout de connecteur après avoir traversé ledit passage central rétréci, on solidarise ensuite, par immobilisation mécanique, l'embout de connecteur de la fibre dans sa partie toujours munie de la gaine externe, et on élimine enfin la partie dénudée de la fibre faisant saillie de l'extrémité avant de l'embout.

Dans ce document l'élimination de la partie dénudée faisant saillie de l'embout s'effectue par polissage. Il est cependant par ailleurs connu d'effectuer une telle élimination par sectionnement (Cf. à titre d'exemple Bell System Technical Journal, Vol. 52, N° 9, Novembre 1973, pp. 1579 à 1587).

Les procédés connus présentent l'inconvénient de créer des perturbations optiques dans la fibre au niveau du connecteur et par conséquent des pertes importantes à la connexion, ces pertes pouvant être de l'ordre de 3 dB. En outre, la mise en place de la fibre dans l'embout de connecteur conduit à un positionnement relatif imprécis et comporte en outre des risques de pollution et d'endommagement de l'extrémité dénudée du cœur de la fibre.

La présente invention se propose de fournir un procédé de mise en place d'une fibre optique dans un embout de connecteur permettant précisément d'éviter les inconvénients des procédés actuellement connus et d'obtenir des pertes à la connexion de l'ordre de 1 dB. Grâce au procédé selon l'invention il est en particulier possible de ne pas perturber les caractéristiques optiques des fibres au voisinage de la connexion, de localiser mécaniquement avec précision l'extrémité du cœur de la fibre à connecter tout en faisant appel à des opérations simples et reproductibles pour mettre en place la fibre dans l'embout de connecteur.

Le procédé selon l'invention se caractérise par le fait que l'on utilise une fibre dont le revêtement ou « cladding » est fait en un matériau mou, les dimensions dudit passage central rétréci de l'embout de connecteur étant par ailleurs choisies par rapport à celles de la fibre démunie de sa gaine de façon à comprimer légèrement le revêtement ou « cladding » de la fibre dans ledit passage, et que l'on effectue l'élimination de ladite partie dénudée de la fibre dépassant de l'extrémité avant de l'embout de connecteur par sectionnement de cette partie, en une zone en retrait de ladite extrémité avant de l'embout.

Dans une forme préférée de réalisation, l'embout de connecteur utilisable pour la mise en œuvre du procédé de l'invention présente dans sa zone d'extrémité avant un passage central rétréci pour la fibre démunie de sa gaine externe, ce passage présentant un volume de révolution autour de l'axe de l'embout, délimité par la paroi interne de l'extrémité de l'embout qui présente une forme bombée vers l'intérieur. Ce passage débouche avantageusement dans sa partie avant dans un lamage formé dans la face frontale de l'embout de connecteur. Les dimensions du passage sont choisies pour que selon l'invention le revêtement ou « cladding » de la fibre se trouve légèrement comprimé au niveau du passage rétréci. On assure ainsi un parfait centrage du cœur de la fibre par rapport à l'embout de connecteur. Cela permet également d'absorber les variations éventuelles du diamètre du revêtement de la fibre.

Un embout de connecteur particulièrement avantageux pour la mise en œuvre du procédé selon l'invention comporte le passage défini ci-dessus dans un canon d'extrémité assemblé à, ou d'un seul tenant avec un fût réalisé en un métal déformable apte au sertissage. Ainsi, au cours de la mise en œuvre du procédé de l'invention, après avoir enfilé la fibre démunie de sa gaine externe dans l'embout de telle façon qu'une partie de la fibre démunie de sa gaine externe se trouve dans le passage réalisé dans le canon de l'embout de connecteur, on assure l'immobilisation définitive de la fibre dans l'embout par sertissage du fût, ce sertissage étant effectué de façon à comprimer la gaine externe de la fibre ainsi que le revêtement sans atteindre le cœur de la fibre. On effectue de préférence un sertissage multi-crans qui d'une part solidarise parfaitement la fibre de l'embout de connecteur et d'autre part ne crée aucune discontinuité du revêtement à la périphérie du cœur ce qui permet de maintenir intactes les caractéristiques optiques de la fibre après sa mise en place dans l'embout.

Pour sectionner l'extrémité de la fibre démunie de la gaine externe, il est particulièrement avantageux d'immobiliser l'extrémité de la fibre dépassant de l'embout de connecteur après lui avoir communiqué une forme légèrement cambrée, après quoi on effectue une amorce de rupture sur le revêtement et le cœur de la fibre en un point légèrement en retrait par rapport à la face avant de l'embout de connecteur, et enfin l'on exerce une traction axiale sur l'extrémité de la fibre. On fracture ainsi de façon nette et parfaitement orthogonale à son axe le revêtement et le cœur de la fibre à l'aplomb de l'amorce de rupture.

Pour assurer la connexion de deux fibres optiques on met ainsi en place sur chacune d'elles un embout de connecteur comme indiqué ci-dessus, après quoi l'on met en place chacun des embouts de connecteur dans un élément de connecteur et l'on réunit ces derniers de façon que les fibres qu'ils contiennent soient en alignement bout à bout. Il est également possible de disposer plusieurs embouts de connecteur dans lesquels les fibres optiques ont été mises en place dans un même connecteur du type « multivoies optiques ».

Dans le but de mieux faire comprendre l'invention on va maintenant décrire à titre d'exemple en aucune manière limitatif un mode de réalisation se référant au dessin annexé dans lequel :

la figure 1   représente la structure d'une fibre optique utilisable dans le cadre de la présente invention,

la figure 2   représente avant leur assemblage une fibre optique et un embout de connecteur,

la figure 3   représente l'embout de connecteur après mise en place de la fibre optique,

la figure 4   est une coupe selon IV-IV de la figure 3,

la figure 5   représente schématiquement un dispositif pour tronçonner l'extrémité de la fibre,

la figure 6   représente une vue agrandie de l'extrémité de l'embout de connecteur au cours de la mise en œuvre du dispositif de tronçonne-ment schématisé dans la figure 5,

la figure 7   représente un élément de connecteur comprenant un embout de connecteur ayant reçu une fibre optique mise en place par le procédé de l'invention,

la figure 8   représente un connecteur obtenu par assemblage de deux éléments de connecteur selon la figure 7.

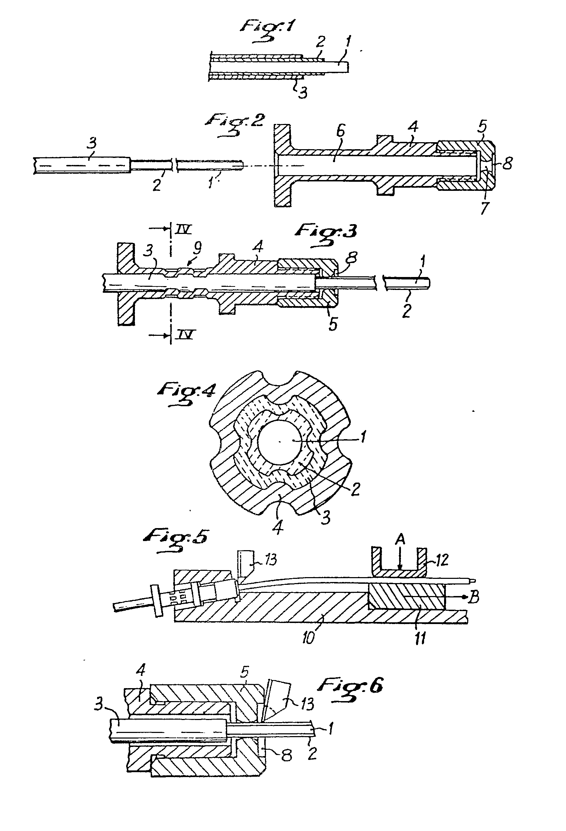

On a représenté sur la figure 1, en coupe, une monofibre optique à saut d'indice, à la connexion de laquelle la présente invention est plus particulièrement destinée.

Cette fibre comporte un cœur 1 en silice pure, un revêtement ou « cladding » 2 en silicone, et une gaine externe 3 de protection mécanique en matière plastique.

Pour mettre en œuvre le procédé selon l'invention, on dénude une telle fibre en retirant à son extrémité la gaine externe 3 de protection mécanique sur une longueur dans la pratique de l'ordre de 40 mm, la partie avant dénudée de la fibre comportant alors non seulement le cœur 1 mais aussi le revêtement ou « cladding » 2.

Comme représenté sur la figure 2, on introduit alors la fibre ainsi dénudée à sa partie avant dans un embout de connecteur constitué d'un fût 4 en un matériau notamment un métal déformable et d'un canon 5. Le canon et le fût peuvent être assemblés par tout moyen mécanique ou même être réalisés d'un seul tenant.

Le fût 4 présente sur toute sa longueur un évidement interne axial 6 qui débouche à l'extrémité avant dans un passage rétréci 7 de la partie avant du canon.

Ce passage 7 présente un volume de révolution autour de l'axe de l'embout de connecteur, ce volume étant délimité par la paroi interne de l'extrémité du canon qui présente une forme bombée vers l'intérieur.

Les dimensions du passage sont choisies de telle sorte que le revêtement 2 de la fibre se trouve légèrement comprimé au niveau du passage 7.

Ce passage débouche dans sa partie avant sur un lamage d'extrémité 8 de la face frontale de l'embout de connecteur.

Après avoir mis en place la fibre dans l'embout dans la position de la figure 3, on effectue un assujettissement de la fibre à l'embout, notamment par sertissage, comme indiqué en 9 sur la figure 3.

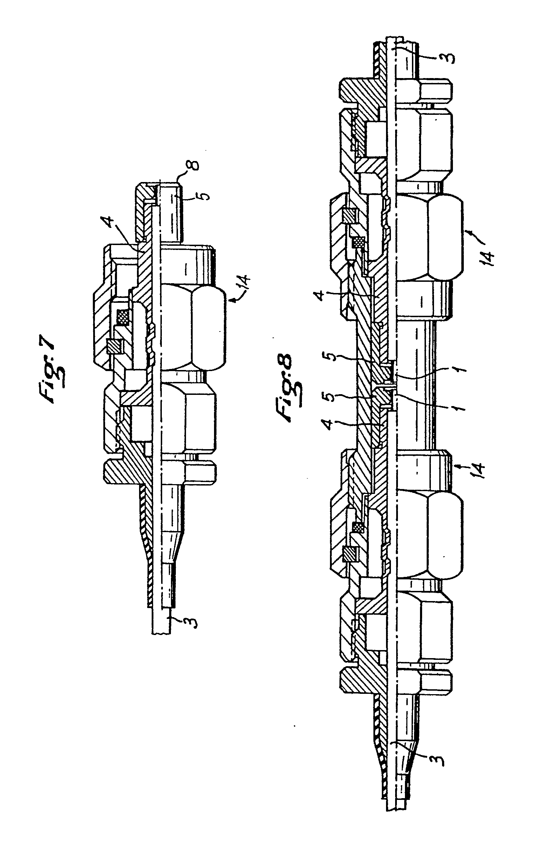

La figure 4, qui est une vue en coupe de la figure 3 dans la zone de sertissage, montre que celui-ci est avantageusement un sertissage multi-crans réalisant une déformation du matériau du fût 4, de la gaine externe de protection mécanique 3 de la fibre et du revêtement ou cladding 2 de celle-ci sans atteindre le cœur 1.

Les figures 5 et 6 illustrent la phase ultérieure de mise en œuvre du procédé de l'invention au cours de laquelle on sectionne la partie avant dénudée de la fibre dépassant de l'embout de connecteur.

Pour ce faire, comme schématisé sur la figure 6, on met en place l'embout de connecteur en position inclinée dans un dispositif de tronçonnement 10, de façon à communiquer à la partie avant dénudée de la fibre un trajet légèrement cambré.

On immobilise la partie avant de la fibre dans un chariot mobile en translation 11 et comprenant un moyen de serrage de la fibre 12.

La flèche A schématise l'effet de la pression de serrage et la flèche B indique le sens de déplacement du chariot. A l'aide d'un couteau diamant 13 susceptible d'être déplacé en translation, on effectue une amorce de rupture sur le revêtement 2 et le cœur 1 de la fibre en un point légèrement en retrait par rapport à la face avant du canon 5 de l'embout, à l'intérieur du lamage 8 comme on le voit dans la figure 6.

L'axe de coupe du couteau 13 est incliné par rapport à la perpendiculaire à l'axe de la fibre sortant de l'embout de connecteur.

Après avoir effectué l'amorce de rupture, on déplace en translation le chariot 11 dans le sens de la flèche B, la fibre étant toujours retenue par le moyen de serrage 12. On assure ainsi une fracture nette et orthogonale du revêtement 2 et du cœur 1 de la fibre à l'aplomb de l'amorce de rupture. Un tel dispositif de tronçonnement permet de positionner la zone de rupture de la fibre par rapport à l'embout avec une précision meilleure que 0,02 mm.

Pour réaliser la connexion de deux fibres optiques on met en place chacune d'elle dans un embout de connecteur selon le procédé décrit ci-dessus, après quoi l'on dispose chaque embout de connecteur dans un élément de connecteur 14 conventionnel représenté sur la figure 7. On assemble alors deux tels éléments de connecteur 14, comme l'indique la figure 8, les fibres optiques se trouvant alors alignées et leur connexion étant ainsi réalisée.

## Revendications

1. Procédé de mise en place d'une fibre optique dans un embout de connecteur, ladite fibre présentant un cœur (1), un revêtement ou cladding (2) et une gaine externe (3) de protection mécanique, dans lequel on dénude la fibre sur une certaine longueur à partir de son extrémité, en retirant la gaine externe de protection mécanique sans retirer le revêtement ou cladding, on enfile la fibre par l'extrémité arrière d'un embout de connecteur tubulaire présentant un passage central rétréci dans sa zone d'extrémité avant, de manière que ladite partie d'extrémité dénudée de la fibre soit en partie contenue dans l'embout de connecteur et fasse en partie saillie de l'extrémité avant de l'embout de connecteur après avoir traversé ledit passage central rétréci, on solidarise ensuite, par immobilisation mécanique, l'embout de connecteur de sa fibre dans sa partie toujours munie de la gaine externe, et on élimine enfin la partie dénudée de la fibre faisant saillie de l'extrémité avant de l'embout, caractérisé par le fait que l'on utilise une fibre dont le revêtement ou cladding est fait en un matériau mou, les dimensions dudit passage central rétréci (7) de l'embout de connecteur étant par ailleurs choisies par rapport à celles de la fibre démunie de sa gaine de façon à comprimer légèrement le revêtement ou cladding de la fibre dans ledit passage, et que l'on effectue l'élimination de ladite partie dénudée de la fibre dépassant de l'extrémité avant de l'embout de connecteur par sectionnement de cette partie, en une zone en retrait de ladite extrémité avant de l'embout.

2. Procédé selon la revendication 1, caractérisé par le fait que ladite immobilisation mécanique est effectuée par sertissage multi-crans de l'embout de connecteur autour de la partie gainée de la fibre.

3. Procédé selon l'une quelconque des revendications 1 et 2, caractérisé par le fait que ledit sectionnement de l'extrémité de la fibre démunie de la gaine externe est opéré en immobilisant l'extrémité de la fibre dépassant de l'embout de connecteur après lui avoir communiqué une forme légèrement cambrée, en effectuant une amorce de rupture sur la fibre dénudée en un point légèrement en retrait par rapport à la face avant de l'embout de connecteur et en exerçant une traction axiale sur l'extrémité de la fibre.

## Claims

1. A method of putting an optical fibre in place in a connector ferrule, the said fibre exhibiting a core (1), a coating or cladding (2) and an outer sheath (3) for mechanical protection, in which the fibre is bared over a certain length from the end of it by withdrawing the outer sheath for mechanical protection without withdrawing the coating or cladding, the fibre is threaded through the rear end of a tubular connector ferrule which exhibits a central passage which is contracted in its front end zone, so that the said bared end portion of the fibre is partially contained in the connector ferrule and partially projects from the front end of the connector ferrule after having passed through the said contracted central passage, then by mechanical fixing the connector ferrule is locked onto the fibre at the portion of it still equipped with the outer sheath, and finally the bared portion of the fibre projecting from the front end of the ferrule is eliminated, characterized by the fact that a fibre is employed, the coating or cladding of which is made of a soft material, the dimensions of the said contracted central passage (7) in the connector ferrule being furthermore chosen with respect to those of the fibre deprived of its sheath, so as to compress the coating or cladding of the fibre slightly in the said passage, and that the elimination of the said bared portion of the fibre overhanging the front end of the connector ferrule is effected by severing this portion in a zone set back from the said front end of the ferrule.

2. A method as in Claim 1, characterized by the fact that the said mechanical fixing is effected by multinotched crimping of the connector ferrule round the sheathed portion of the fibre.

3. A method as in either of the Claims 1 and 2, characterized by the fact that the said severing of the end of the fibre deprived of the outer sheath is carried out by fixing the end of the fibre overhanging from the connector ferrule after having imparted to it a slightly curved shape, by effecting the beginning of a breakage upon the bared fibre at a point slightly set back with respect to the front face of the connector ferrule and by exerting an axial pull upon the end of the fibre.

**Ansprüche**

1. Verfahren zum Anbringen einer optischen Faser in einer Verbindungszwinge, wobei die optische Faser eine Seele (1), eine Ummantelung oder Umhüllung (2) und einen äußeren, mechanisch schützenden Mantel (3) aufweist, bei dem man zunächst auf einer gewissen Länge und ausgehend vom freien Ende den äußeren, mechanisch schützenden Mantel zurückzieht, ohne die Ummantelung oder Umhüllung zurückzuziehen, die Faser durch den rückwärtigen Endbereich einer rohrförmigen Verbindungszwinge einführt, die einen zentralen, verengten Durchlaß in ihrem vorderen Endbereich aufweist, so daß der entmantelte Endbereich der Faser sich teilweise in der Verbindunszwinge befindet une teilweise gegenüber dem vorderen Endbereich der Verbindungszwinge vorsteht, nachdem er den genannten, zentralen und verengten Durchlaß durchlaufen hat, bei dem anschließend durch mechanische Befestigung die Verbindungzwinge mit der Faser in ihrem noch mit dem äußeren Mantel versehenen Bereich verbunden wird und schließlich der entmantelte Bereich der Faser, der vor dem vorderen Endbereich der Verbindungszwinge vorsteht, entfernt wird, dadurch gekennzeichnet, daß eine Faser verwendet wird, deren Ummantelung oder Umhüllung aus einem weichen Material besteht, daß die Abmessungen des genannten, verengten zentralen Durchlasses (7) der Verbindungszwinge so in Bezug auf die Abmessungen der von ihrem Mantel befreiten Faser gewählt sind, daß die Ummantelung oder Umhüllung der Faser im genannten Durchlaß leicht komprimiert wird, und daß das Entfernen des entmantelten, am vorderen Endbereich der Verbindungszwinge überstehenden Bereichs der Faser durch Abtrennen dieses Endbereichs an einer Stelle erfolgt, die hinter dem vorderen Endbereich der Verbindungszwinge liegt.

2. Verfahren nach Anspruch 1, dadurch gekennzeichnet, daß die genannte mechanische Befestigung durch eine vielkerbige Einspannung der Verbindungszwinge um den mit Mantel versehenen Bereich der Faser erfolgt.

3. Verfahren nach Anspruch 1 oder 2, dadurch gekennzeichnet, daß das genannte Abtrennen des Endbereichs der von ihrem äußeren Mantel befreiten Faser dergestalt durchgeführt wird, daß dieser, aus der Verbindungszwinge vorstehende Endbereich der Faser festgehalten wird, nachdem ihm zuvor eine geringfügige Biegung verliehen wurde und daß man einen Ausgangspunkt für einen Bruch auf der entmantelten Faser an einer etwas gegenüber der Frontfläche der Verbindungszwinge zurückliegenden Stelle schafft und einen axialen Zug auf den Endbereich der Faser ausübt.

Fig.1

Fig.2

Fig.3

Fig.4

Fig.5

Fig.6

Fig.7

Fig.8